# EUROPEAN PATENT APPLICATION

(11) **EP 2 517 554 A1**
(43) Date of publication of application: **31.10.2012**
(21) Application number: 12382103.5
(22) Date of filing: 21.03.2012
(51) Int. Cl.: A01K 63/06

(54) **Aquarium cover with waterproof LED lighting system.**

(30) Priority: 24.03.2011 ES 201130434
(71) Applicant: Industrias Canarias del Acuario S.A., 35001 Las Palmas de Gran Canaria (ES)
(72) Inventor: Cabrera Roca, Gaspar, 35001 Las Palmas de Gran Canaria (ES)

(57) **Abstract**

This invention refers to an aquarium cover with a waterproof LED lighting system consisting of a set of light emitting diodes or LED lamps encapsulated in one or more transparent waterproof silicone strips.

## Description

### Purpose of the Invention

The invention applied for refers to an aquarium cover with a waterproof LED lighting system consisting of a set of light emitting diodes or LED lamps encapsulated in one or more transparent waterproof silicone strips.

### Background of the Invention

Many systems used today to cover and light aquariums basically use a simple glass strip with fixed orifices and screens, or plastic covers with lighting using incandescent or florescent lamps, which could involve dangerous exposure of their metal electricity conducting components to the high level of humidity present in this type of installation.

### Description of the invention

The proposed invention, subject of this report, has significant characteristics that make it particularly useful, thanks to its total resistance to the presence of condensed water in the cover due to the impermeability of the lighting system and the great improvement achieved in savings by using this low consumption lighting technology and the high quality of the final aesthetics.

With this type of lamp it is possible to graduate the lighting, combine colours and reduce the heat radiation caused by other systems, improving the aesthetics of the whole set-up. Indeed, the lighting angle covers the whole aquarium without casting shadows, allowing proper growth of the plant life of the aquarium. Moreover, these lamps do not emit UVA and represent a considerable saving in the manufacturing process when compared with traditional ones. They are also considered environment-friendly because, unlike fluorescent lamps, they contain no mercury or toxic materials, last longer and can be completely recycled.

For a better understanding of this invention, we shall describe it using the accompanying drawing showing a preferential design thereof given by way of example only.

In the drawing:

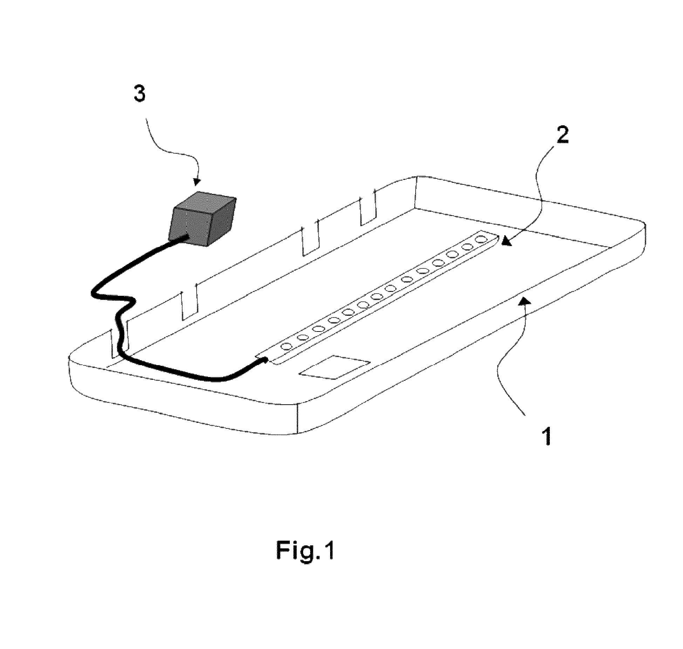

- Figure 1 represents a perspective view of the inside of the cover where the lighting system is housed.

As you can see in the figure, the aquarium cover comprises: A base frame (1) with the usual holes of an aquarium frame for inserting purification, aeration, heating and feeding systems, (2) lighting system with LED lamps encapsulated in waterproof transparent silicone strips and (3) lighting control system.

Typically, ornamental aquariums are formed by a tank with a rectangular upper surface.

As shown in the figures, the base frame (1) has a rectangular outline, made with the appropriate measurements for the tank it has to cover.

In the figure, you can see punched areas and holes for the optional placement of the backpack type filter system and/or the automatic fish feeding system.

In addition, you can observe the presence of a moulded area for the placement of the connection mechanisms of the new lighting system (2), based on LED lamps, which are located inside a silicone strip or tube.

Depending on the size of the aquarium, the cover can adapt the appropriate number of lamps, with the punch holes for the coupling or sticking of the silicone strip or tube containing the appropriate LED lamps (2), with the possibility of having a set of LEDS of different colours apart from white which, using the appropriate regulation and control system (3), allows the user to set up different lighting scenes, being able to vary the intensity of the lighting and play with shadows and reflections, and all with low consumption and a high degree of safety from electrical risks caused by the presence of moisture.

Having sufficiently described the nature of this invention, as well as a way of putting it into practice, it is just necessary to add that the whole set-up and the parts that comprise it can be subject to changes in shape, materials and arrangement, provided such alterations do not substantially vary the characteristics of the invention or those claimed below:

## Claims

1. **Aquarium cover with waterproof LED lighting system.-** essentially **characterized by** the fact that it consists of an aquarium cover with LED lighting system formed by a set of light emitting diodes or LED lamps encapsulated in one or more waterproof transparent silicone strips.

2. **Aquarium frame with waterproof lighting system with low consumption LED lamps.-** according to the 1st claim, also **characterized by** the fact that it consists of a regulation and control system to activate different types of lighting with various intensities and colours.
